Europäisches Patentamt

European Patent Office

Office européen des brevets

(19)

(11) Veröffentlichungsnummer: **0 037 933**
**B1**

(12) **EUROPÄISCHE PATENTSCHRIFT**

(45) Veröffentlichungstag der Patentschrift:
**27.06.84**

(21) Anmeldenummer: **81102230.0**

(22) Anmeldetag: **25.03.81**

(51) Int. Cl.³: **F 23 G 3/00, A 47 K 11/02,
E 21 F 9/00**

(54) Schlagwettergeschützte elektrische Verbrennungstoilette.

(30) Priorität: 14.04.80 DE 3014244
25.11.80 DE 3044377

(43) Veröffentlichungstag der Anmeldung:
21.10.81 Patentblatt 81/42

(45) Bekanntmachung des Hinweises auf die Patenterteilung:
27.06.84 Patentblatt 84/26

(84) Benannte Vertragsstaaten:
AT BE CH DE FR GB IT LI LU NL SE

(56) Entgegenhaltungen:
DE - C - 433 275
US - A - 3 943 579

(73) Patentinhaber: Nelken, Ewald, Elbestrasse 21,
D-4330 Mühlheim (DE)

(72) Erfinder: Nelken, Ewald, Elbestrasse 21,
D-4330 Mühlheim (DE)

(74) Vertreter: Patentanwälte Meinke und Dabringhaus
Dipl.-Ing. J. Meinke Dipl.-Ing. W. Dabringhaus,
Westenhellweg 67, D-4600 Dortmund 1 (DE)

BUNDESDRUCKEREI BERLIN

**Beschreibung**

Die Erfindung richtet sich auf eine elektrische Verbrennungstoilette mit einem den Sitz und den Toilettendeckel tragenden Gehäuse sowie einem ersten Aufnahmeraum für die Toilettenabfälle sowie einem in Schwerkraftsrichtung darunterliegenden, mit einem feuerfesten Deckel abgeschlossenen Verbrennungsraum mit Aschenfach.

Verbrennungstoiletten, z. B. für Wohnwagen, Ferienhäuser od. dgl. sind beispielsweise aus der US-A-3 943 579 bekannt. Diese bekannte Verbrennungstoilette wird insbesondere für den privaten Gebrauch und an Orten benutzt, die nur sehr schwer mit ausreichenden Mengen von Wasser versorgbar sind oder bei denen die anfallenden Fäkalien nur sehr schwer beseitigt werden können. Zum Betrieb derartiger Verbrennungstoiletten ist es nämlich nur notwendig, Strom zur Verfügung zu haben. Die anfallenden Abfälle werden durch eine entsprechende Heizspirale so stark erhitzt, daß sie zu Asche verbrannt werden. Die entstehenden Verbrennungsgase werden über einen Filter durch ein Gebläse ins Freie gefördert. Die Asche ist umweltfreundlich. Die elektrischen Verbrennungstoiletten sind chemischen Toiletten überlegen.

Geht man von sanitären Zuständen beim Untertagebau insbesondere in Kohlegruben aus, so ist seit langem hier der Wunsch vorhanden, eine ausreichende sanitäre Versorgung der Untertagearbeitenden zu gewährleisten. Bisher ist man in der Regel auf die Benutzung offener Fäkalieneimer angewiesen, die vor Ort aufgestellt sind und von einer, in der Regel eigens dafür angestellten, Person nach Übertage transportiert, dort gereinigt und wieder Untertage gebracht werden müssen. Daß diese Verfahrensweise nicht nur unwirtschaftlich ist, liegt auf der Hand, sie ist darüber hinaus aber auch in hohem Maße unhygienisch.

Aufgabe der Erfindung ist daher die Schaffung einer Lösung, mit der eine ausreichende sanitäre Versorgung Untertage, insbesondere bei Steinkohlegruben, gewährleistet wird, wobei eine Toilette nicht an einen bestimmten stationären Einbauort gebunden ist, sondern entsprechend ihrer Bestimmung, direkt vor Ort jeweils nachgeführt werden kann.

Bei einer elektrischen Verbrennungstoilette der eingangs bezeichneten Art wird diese Aufgabe gemäß der Erfindung dadurch gelöst, daß die Toilette als schlagwettergeschützte Verbrennungstoilette ausgebildet ist, wobei der Schlagwetterschutz durch eine preßluftbeaufschlagte Kapselung erfolgt, und daß die Kapselung über eine Preßluftzufuhr- und eine Preßluftabfuhrleitung preßluftdurchströmbar ausgebildet ist.

Durch die Erfindung wird erreicht, daß eine elektrische Verbrennungstoilette jederzeit vor Ort eingesetzt werden kann, ohne daß es zu den besonders gefährlichen Schlagwetterexplosionen kommt, bei denen ein Gemisch aus atmosphärischer Luft und Methan, etwa im Mischungsverhältnis von 91% Luft zu 9% Methan bereits durch geringe Zündquellen gezündet werden kann, d. h. z. B. durch Funken, verursacht von elektrischen Geräten, von Auspuffflammen von Verbrennungskraftmaschinen, von Zigaretten od. dgl. mehr.

Aus der DE-C-433 275 ist die Einkapselung von Elektrizität führenden Körpern in dichtgeschlossenen druckluftgefüllten Behältern zur Verhütung der Schlagwettergefahr in Gruben bekannt, wobei dort insbesondere das Problem elektrischer Grubenlokomotiven und der Lichtbogenbildung an den entsprechenden Oberleitungen angesprochen ist. Diese Erkenntnis macht sich die Erfindung zunutze, da auch heute noch vor Ort bei den heute angewandten Abbaumethoden nicht nur ausreichend Kraftstrom zur Verfügung steht, sondern auch jederzeit Preßluft zum Betrieb der Abbau- oder Fördergeräte, kann die erfindungsgemäß ausgestattete, schlagwettergeschützte Toilette jederzeit an das Preßluftversorgungsnetz angeschlossen werden und ermöglicht somit einen ungefährdeten Betrieb der derart ausgerüsteten sanitären Anlagen.

Diese spezielle Kapselung der explosionsgefährdeten Teile nach Anspruch 2 ermöglicht eine sehr kleine Bauweise der Verbrennungstoilette, die durchströmende Preßluft sorgt dafür, daß sie mit den elektrischen Aggregaten in Berührung stehende Luft laufend ausgetauscht wird, so daß ggf. ungünstige Mischverhältnisse dort nicht auftreten können, was insbesondere auch für den Verbrennungsraum gilt, der ebenfalls von dieser Preßluft durchzogen ist.

Eine Ausgestaltung nach Anspruch 3 kann immer dort erfolgen, wo stationäre Anlage möglich sind, beispielsweise bei Reparaturwerkstätten unter Tage, bei Be- und Entladeeinrichtungen od. dgl. mehr.

Bei den Maßnahmen nach Anspruch 4 kann es sich z. B. um Windfahnenschalter innerhalb der Preßluftleitung handeln, um druckdosenbeaufschlagte, den Druckabfall bei Preßluftausfall registrierende Schalter oder um Sensorschalter, die eine Temperaturänderung nach Ausfall der in der Regel gegenüber der Umgebung unter Tage kälteren Preßluft feststellen. Gegenstand der Erfindung ist auch, daß wenigstens ein Sicherungselement derart vorgesehen ist, daß bei Übergabe der Toilettenabfälle aus dem ersten Raum in den Verbrennungsraum die Zufuhr elektrischen Stromes unterbrochen ist.

Es hat sich gezeigt, daß zur Lösung der Aufgabe mit funktionssicheren Elementen und in kompakter Ausgestaltung einer Verbrennungstoilette zur ausreichenden sanitären Versorgung unter Tage, insbesondere bei Steinkohlegruben, eine Einschränkung des Schlagwetterschutzes auf den Verbrennungsraum möglich ist, wie dies in Ausgestaltung in Anspruch 5 vorgesehen ist.

Wichtig für den Schlagwetterschutz ist, wie oben bereits beschrieben, die Schaffung einer schlagwetterfreien Atmosphäre in den Bereichen, in denen Temperaturen auftreten können, die zu einer Zündung des explosiven Grubengases führen könnten, was insbesondere bei Funkenbildung, glühenden Elementen od. dgl. der Fall ist. Daher löst die Erfindung die obige Aufgabe durch einfache Mittel, indem sie diesen für die vorliegende Verbrennungstoilette wesentlichen Bereich druckluftbeaufschlagt ausbildet und damit die Voraussetzungen schafft, vor Beginn eines Verbrennungsvorganges von Fäkalien, den Brennraum mit einer Atmosphäre zu versehen, die völlig frei von Grubengas ist, was durch Anschluß an die grubeneigene Druckluftleitung erreicht werden kann.

Auch die Zwangsführung der Spülluft durch den Katalysator und die entsprechende Katalysatorkammergestaltung durch Doppelkammerausbildung der Brennraumwand in Anspruch 6 ist von Bedeutung, da mit diesen Gestaltungen ein geruch- und bakterienfreies Betreiben der Toilette an jedem Ort möglich ist.

Um die Handhabung der Toilette dem entsprechenden Grubenbetrieb unter Tage anzupassen und eine möglichst vielseitige Anwendung erreichen zu können, ist nach der Erfindung eine automatische Entleerung des Aschenfaches vorgesehen, wie dies der Anspruch 7 näher definiert. Durch die besondere Gestaltung lassen sich Wirbelströme in der Aschenkammer erzeugen und in Art eines Zyklons die keim- und geruchsfreie Asche nach außen z. B. in die Umgebung oder einen Aschesack einblasen.

Zweckmäßig ist auch, wenn alle Elemente insbesondere bei Betrieb der Verbrennungsheizung an den Stellen, an denen sie mit Grubengas in Berührung kommen, eine Temperatur aufweisen, die wesentlich unter der Zündtemperatur liegt, d. h. vorzugsweise in einem Bereich unter 200°C. Dies wird bei der erfindungsgemäßen Verbrennungstoilette durch die Maßnahme nach Anspruch 8, d. h. durch eine Druckluftkühlung aller dieser Elemente erreicht, deren spezielle Ausgestaltung Gegenstand weiterer Ansprüche ist.

In Anspruch 9 ist der für einen Betrieb unter Tage ausgelegte Arbeitszyklus der Verbrennungstoilette beschrieben, der sich insbesondere durch Spülzeiten des noch nicht überhitzten Verbrennungsraumes auszeichnet.

Ist der Brennraum bereits mit Fäkalien gefüllt, erfolgt vor Einsetzen des Verbrennungsvorganges ein erneutes Spülen durch die Zwangsführung der Spülluft. Durch die Katalysatorschicht wird eine Geruchsbelästigung der Umgebung vermieden.

Weitere Merkmale, Vorteile und Einzelheiten der Erfindung ergeben sich aus der nachfolgenden Beschreibung sowie anhand der Zeichnung. Diese zeigt in

Fig. 1 ein Toilettenhäuschen in vereinfachter Darstellung mit darin befindlicher Verbrennungstoilette,

Fig. 2 einen Schnitt durch eine Verbrennungstoilette nach der Erfindung ebenfalls in vereinfachter Darstellung in größerem Maßstab,

Fig. 3 einen Schnitt durch eine elektrische Verbrennungstoilette nach einem abgewandelten Ausführungsbeispiel in stark vereinfachter Darstellung,

Fig. 4 einen Vertikalschnitt durch den Verbrennungsraum mit Aschefach in der Ansicht gemäß Pfeil IV,

Fig. 5 bis 7 Horizontalschnitte in Schnittebenen nach Pfeilen V bis VII in Fig. 3 durch den Verbrennungsraum.

Die mit 1 bezeichnete Toilette besteht im wesentlichen aus einem den Sitz 2 und den Deckel 3 tragenden Gehäuse 4 mit einem trichterförmigen Aufnahmeraum 5 für die Toilettenabfälle, der in der Gebrauchslage in der Regel mit einer dafür bestimmten Papiertüte ausgelegt ist, was jedoch nicht näher dargestellt ist.

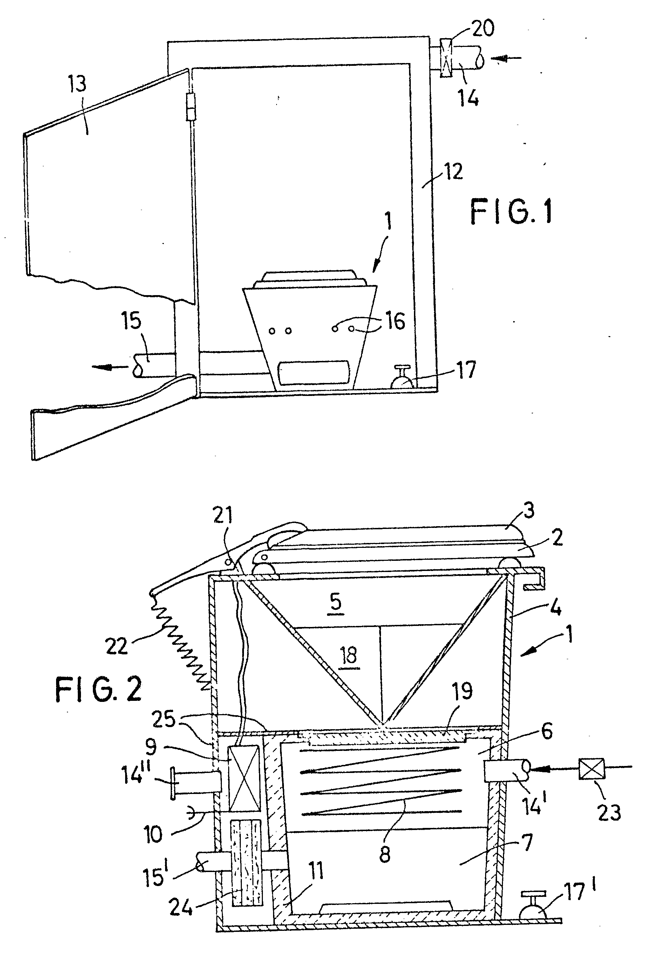

Unterhalb des Aufnahmeraumes 5 befindet sich ein Verbrennungsraum 6 mit in Schwerkraftsrichtung darunterliegenden Aschenfach 7. Die Verbrennung wird von einer Heizspirale 8 bewirkt, die über eine elektrische Versorgungsanlage von einem Schalt- und Sicherungskasten 9 versorgt wird. In Fig. 2 ist die elektrische Anschlußleitung mit 10 bezeichnet und sehr vereinfacht dargestellt. Der Verbrennungsraum ist mit einer wärmedichtenden Ummantelung 11, z. B. aus feuerfestem Material, z. B. Asbest, umgeben.

In Fig. 1 ist die Möglichkeit dargestellt, die Toilette 1 in einem Toilettenhäuschen 12 anzuordnen, wobei die geöffnete Tür mit 13 bezeichnet ist, die Tür 13 soll im wesentlichen luftdicht schließen und von einem Türschließer bewegt sein, was nicht näher dargestellt ist. Das Toilettenhäuschen 12 ist mit einer Preßluftzufuhrleitung 14 und mit einer Preßluftabfuhrleitung 15 ausgerüstet, wobei im dargestellten Beispiel die Zufuhrleitung 14 im Deckenbereich des Toilettenhäuschens 12 angeordnet ist, während die Abfuhrleitung aus dem Gehäuse der Toilette 1 nach außen geführt ist.

Die Zufuhr- und Abfuhrleitung zum abgewandelten Ausführungsbeispiel nach Fig. 2 ist mit 14' bzw. 15' bezeichnet.

Um den Zutritt der über die Zufuhrleitung 14 einströmenden Preßluft in das Gehäuse der Toilette 1 zu gewährleisten, können zusätzliche Eintrittsöffnungen 16 vorgesehen sein. Ein Fußschalter 17, mit dem u. a. das Öffnen von Trichterelementen 18, das Wegschwenken eines den Brennraum verschließenden feuerfesten Deckels 19 und das Einleiten des Verbrennungsvorganges ausgelöst wird, ist nur vereinfacht dargestellt; statt dessen können auch Handschalter, Pedalschalter od. dgl. vorgesehen sein.

Als Sicherheitselemente, die beispielsweise den Ausfall der Preßluftversorgung feststellen und berücksichtigen, kann z. B. ein Schalter 20 in der Preßluftzufuhrleitung 14 vorgesehen sein, der bei Ausfall der Preßluft die Stromzufuhr zur Toilette 1 gänzlich unterbricht. Darüber hinaus kann z. B. im Schwenkgelenk 21 des von einer Druckfeder 22 zwangsgeschlossenen Deckels 3 ein weiterer Schalter vorgesehen sein, der bei Öffnen des Deckels 3 die Stromzufuhr zur Toilette unterbricht und einen ggf. durch kurz vorher stattgefundene Benutzung eingeleiteten Verbrennungsvorgang abbricht, so daß nach erneutem Betätigen des Fußschalters 17 und damit des Öffnens der Brennkammer gegenüber der Umgebungsluft die Heizspirale 8 soweit abgekühlt ist, daß die kritische Entzündungstemperatur für evtl. vorhandene Grubengase unterschritten ist, wobei die laufend strömende Preßluft die Abkühlung der Heizschlange noch beschleunigt. Die Druckfeder 22 zum Schließen des Deckels 3 ist dabei so eingestellt, daß der Schließvorgang erst nach einigen Minuten erfolgt, wenn der die Toilette bereits verlassende Benutzer versehentlich das Schließen vergessen haben sollte. Erst nach vollständigem Schließen des Deckels 3 setzt der Verbrennungsvorgang im dann ebenfalls wiederum vom Deckel 19 vollständig geschlossenen Verbrennungsraum 6 wieder ein, der permanent von Preßluft durchströmt ist, so daß eine explosionsgefährliche Grubengasmischung dort nicht vorhanden sein kann.

Vor dem Eintritt der Preßluft, entweder in das Toilettenhäuschen 12 oder die Toilette 1, kann ein Reduzierventil 23 vorgesehen sein, um z. B. die Preßluft von einem Betriebsdruck von 5 bar auf 1 bar herunterzuspannen.

Neben den beschriebenen Sicherheitsmaßnahmen ist insbesondere aus Fig. 2 ersichtlich, daß sämtliche zum Betrieb notwendigen elektrischen Aggregate, die mit 9 lediglich beispielsweise angedeutet sind, und die Heizspirale 8 innerhalb einer Einkapselung 25 liegen, die von Preßluft durchströmt ist. Mit 14″ ist ein Preßlufteingang angedeutet, der vom Preßlufteingang 14′ in den Verbrennungsraum unabhängig ist und zusätzlich alle anderen Aggregate mit Preßluft umspült. Der Austritt kann wiederum über die Ablaßleitung 15′ erfolgen, unter Zwischenschaltung z. B. eines Aktivfilters 24.

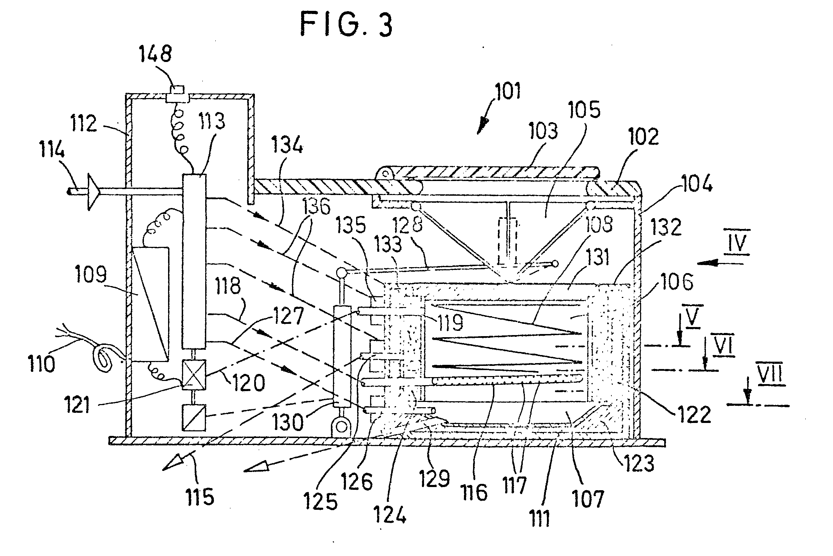

Ein weiteres abgewandeltes Ausführungsbeispiel ist in den Fig. 3 bis 7 dargestellt. Die Bezugsziffern beginnen hier mit 101.

Neben dem Gehäuse 104 der Verbrennungstoilette 101 ist ein Schalt- und Steuerschrank 112 in Fig. 3 vereinfacht wiedergegeben, der die gesamte pneumatische Steuerung 113 der Toilette und alle zum Betrieb notwendigen elektrischen Schaltelemente trägt, was sehr stark vereinfacht wiedergegeben ist. Eine Druckluftzufuhrleitung 114 führt in den Steuerschrank 112 und von dort wird die gesamte pneumatische Steuerung 113 beaufschlagt. Die Druckluftabfuhrleitung 115 ist vereinfacht wiedergegeben. Sie kann ins Freie führen, oder in ein gesondertes Druckluftrückführsystem, was nicht näher dargestellt ist.

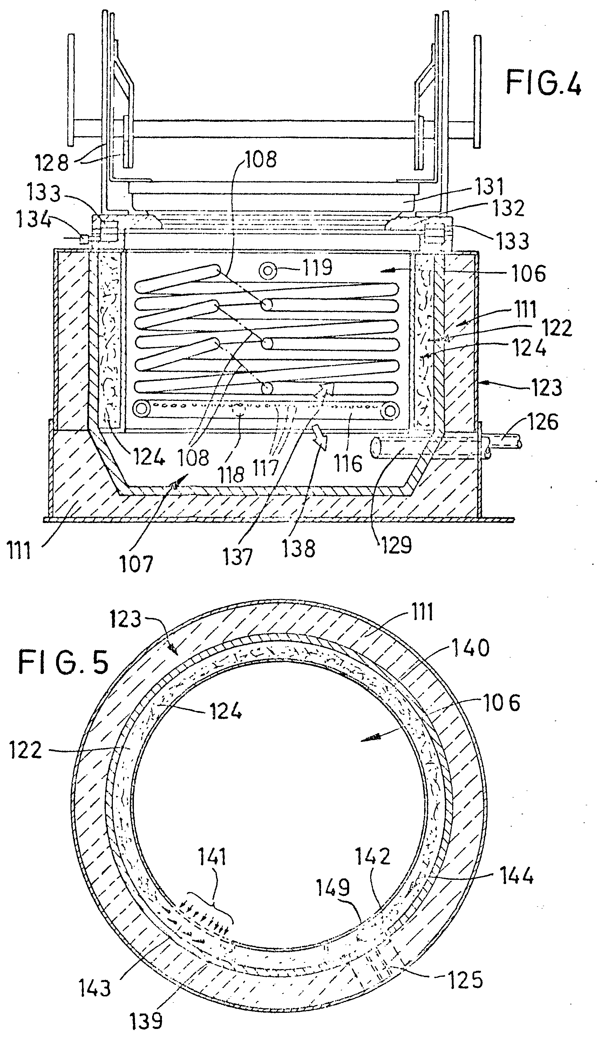

In Fig. 3 sind noch vereinfacht weiter unten näher beschriebene Bauteile der Verbrennungstoilette angedeutet. Neben der mit 108 bezeichneten Heizspirale, wie sich aus Fig. 4 ergibt, sind nach einem bevorzugten Ausführungsbeispiel drei Heizspiralen 108 vorgesehen, mit je einer Leistung von 1200 W für 320 V ist im unteren Bereich des Heizraumes noch ein ringförmiges Druckluft-Spülrohr 116 mit einer Vielzahl von Druckluftaustrittsöffnungen 117 angeordnet. Die Austrittsöffnungen sind so angebracht, daß ein Teil Spülluft in den oberen Bereich des Verbrennungsraumes 106 einbläst (Pfeil 137, Fig. 4), während ein anderer Teil die Spülluft in das Aschefach 107 einbläst (Pfeil 138, Fig. 4). Die Zufuhrleitung der Druckluft zum Spülrohr 116 ist mit 118 bezeichnet.

Im oberen Bereich des Verbrennungsraumes befindet sich ein Druckrohr 119, das über eine Druckluftleitung 120 einer Wärmeüberlastungssicherung 121 verbunden ist, die z. B. bei der Überschreitung von ca. 800° C durchschmilzt und die gesamte Energiezufuhr zur elektrischen Verbrennungstoilette unterbricht, was nicht näher dargestellt ist.

Wie bereits aus Fig. 3 erkennbar, ist die Wand des Verbrennungsraumes 106 im wesentlichen als Doppelkammer mit einer konzentrisch angeordneten Innenkammer 122 und einer Außenkammer 123 ausgebildet. In der Innenkammer 122 befindet sich eine Füllung 124 aus eine Katalysationsmaterial, während sich in der Außenkammer die Wärmeisolation 111 befindet.

Die Druckluftabfuhrleitung 115 ist an einem Austrittsstutzen 125 vorgesehen, der bis in den Bereich der Innenkammer 122 ragt.

In das Aschefach 107 ragt ein Drucklufteintrittsstutzen 126, der über eine Leitung 127 von der Steuerung 113 mittels Druckluft beaufschlagt wird. Ein als Ascheausblasstutzen fungierender Druckluftaustritt 129 führt aus dem Aschefach ins Freie, wobei die einzelnen Funktionen weiter unten näher beschrieben sind.

Der Brennraum 106 ist mit einem wärmeisolierten, über ein in Fig. 3 nicht näher dargestelltes Gestänge 128 und Pneumatik-Zylinder 130, betätigten Deckel 131 abgeschlossen. Der Rand- bzw. Flanschbereich 132 der Verbrennungskammer im Bereich des Deckels 131 ist mit einer Ringleitung 133 versehen, durch die über eine Leitung 134 Druckluft zur Kühlung dieses Bereiches geleitet werden kann.

Wie sich aus Fig. 3 noch ergibt, sind alle zum Verbrennungsraum bzw. Aschefach geführten Leitungen in ihren jeweiligen unmittelbaren Nachbarbereichen zum Verbrennungsraum mit Kühlkammern 135 versehen, die über Leitungen 136 mittels Druckluft gekühlt werden können.

In den Fig. 4—7 sind Einzelheiten, insbesondere am Verbrennungsraum 106 mit Aschefach 107, näher dargestellt. Wie sich dabei insbesondere aus Fig. 5 ergibt, ist die den Katalyt aufnehmende Innenkammer 122 mit einer etwa senkrecht verlaufenden Trennwand 139 ausgerüstet. Die dem Verbrennungsraum 106 zugewandte innere Kammerwand 140 ist mit einer Vielzahl von im Bereich dieser Trennwand 139 vorgesehenen Eintrittsöffnungen 141 für die durch das Spülrohr 116 eingeblasene Spülluft versehen. Die Auslaßöffnung aus dem Katalyt ist in Fig. 5 mit 142 bezeichnet. Diese Auslaßöffnung beaufschlagt direkt den Austrittsstutzen 125 für die Abluft. Durch diese Ausgestaltung wird eine Zwangsführung der Spülluft in Richtung der Pfeile 143 durch den Katalyten hindurch, gemäß Pfeil 144 aus dem Katalyten hinaus und entsprechend Pfeil 149 in den Abluftstutzen erreicht. Durch diese Konstruktionsmerkmale wird die Spülluft gezwungen, den gesamten Katalytraum 122 zu durchströmen, so daß eine optimale Ausnutzung des Katalyten gewährleistet ist.

Nicht näher dargestellt ist eine ähnliche Kreisringführung von Kühlluft im Flanschbereich 132 der Brennkammer.

Auch der Ringkanal 133 für die Kühlluft ist durch eine senkrechte Wand zur Zwangsführung der Kühlluft ausgerüstet. Die Kühlluft tritt durch die Leitung 134 in den Ringnut 133 ein und tritt unmittelbar vor der Zeichenebene nach Fig. 4 aus einem nicht näher dargestellten Austritt aus. Zwischen dem Eintritt 134 und dem nicht näher dargestellten Austritt ist die ebenfalls nicht näher dargestellte Trennwand vorgesehen.

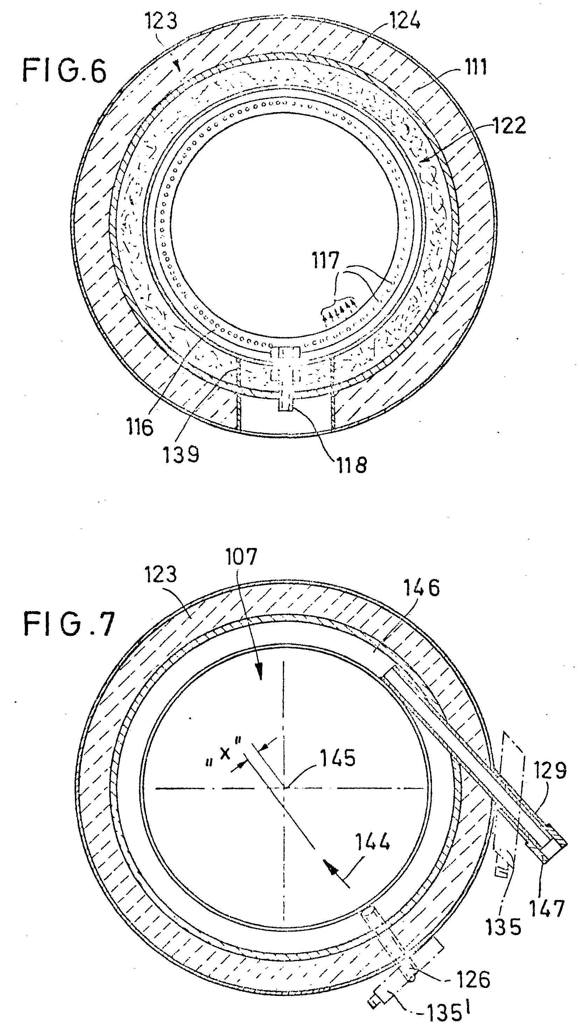

In Fig. 6 ist etwas näher das Spülrohr 116 mit dem Drucklufteintritt 118 dargestellt, wobei die Lage der Bohrungen 117 dort aus Darstellungsgründen nicht in der geneigten Lage nach oben, insbesondere nicht in der Lage nach unten, dargestellt ist. Dies ergibt sich vielmehr auch in Verbindung mit Fig. 4.

Schließlich ist in Fig. 7 der untere Aschenfachbereich, insbesondere die Lage und Zuordnung des Luftdruckeintrittes 126, dargestellt. Der in Richtung des Pfeiles 144 eintretende Luftdruckstrahl trifft nicht genau auf die mit 145 bezeichnete Mittelsenkrechte des Aschefaches 107, sondern ist um einen geringfügigen Betrag »x« gegenüber dieser seitlich versetzt. Der Druckluftaustritt 129 ist im Bereich der mit 146 bezeichneten Innenwand des Aschefaches angeordnet und führt die Abluft tangential aus diesem Raum nach außen. Wie sich aus Fig. 7 erkennen läßt, wird bei Einblasen von Druckluft in Richtung des Pfeiles 144 innerhalb des Aschefaches eine Wirbelströmung dadurch erzeugt, daß der eingeblasene Luftdruckstrahl exzentrisch zum Kammermittelpunkt geführt ist, wobei der Wirbel über das Ausblasrohr 129 nach außen geführt ist. Durch den Wirbel wird die in dem Aschefach befindliche Asche durch den Ausblasstutzen nach außen geführt. An dem Ausblasstutzen 129 ist eine Einrichtung 147, z. B. ein Außengewinde, vorgesehen, um einen Aschesack od. dgl. dort befestigen zu können.

Wie sich auch aus Fig. 7 ergibt, sind alle mit den Warmräumen in Verbindung stehenden Ein- bzw. Ausblasstutzen mittels äußerer Kühlkammern 135 druckluftgekühlt, wobei diese Druckluft in Reihe geschaltet sein kann und später vorgewärmt zum Einblasen als Spülluft in die Kammer heranziehbar ist oder aber jeweils getrennt geschaltet ist, je nach den Betriebsbedingungen der Verbrennungstoilette.

Die Wirkungsweise der Verbrennungstoilette ist die folgende:

Will jemand die Toilette benutzen, legt er zunächst eine Papiertüte in den Trichterraum 105 ein, was insbesondere zur Verhinderung von Wandbeschmutzungen der völlig ohne Wasser arbeitenden Toilette dienen soll. Nach der Benutzung wird ein Schalter 148 betätigt, der den gesamten Arbeitszyklus der Toilette startet. Zunächst wird zeitbegrenzt, z. B. zwei Minuten lang, der Verbrennungsraum und das Aschefach mit Spülluft gespült, die über die Ringleitung 116 eintritt und nach Passieren des Katalyten über den Rohrstutzen 118 austritt. Danach wird automatisch der Deckel 131 des Verbrennungsraumes über das Hubgestänge 128 hydraulisch zur Seite geschwenkt und die die Fäkalientüte haltenden Trichterelemente aufgeschwenkt, so daß die Fäkalientüte in den Verbrennungsraum einfällt. Nach Schließen des Deckels 131 des Verbrennungsraumes 106 wird erneut, z. B. drei Minuten lang, der Brennraum druckluftgespült, da bei Öffnen und Schließen des Brennraumdeckels Grubengase in den Verbrennungsraum einströmen können. Durch die Zwangsführung der Spülluft durch den Katalyten ist eine Geruchsbelästigung der Umgebung ausgeschlossen. Nach Beendigung des Spülvorganges werden die Heizelemente eingeschaltet, wobei gleichzeitig ein geringfügiger Überdruck im Verbrennungsraum durch Spülen mit Spülluft aufrechterhalten wird. Nach Beendigung des Verbrennungsvorganges, der z. B. fünfzig Minuten betragen kann, wird die Heizung abgeschaltet und der Verbrennungsraum mit Aschefach erneut zeitlich begrenzt druckluftgespült. Anschließend erfolgt das Ausblasen der Asche aus dem Aschefach, was durch Einschalten der Preßluft zum Einblasstutzen 126 erfolgt. Der Zyklonwirbel trägt die im Aschefach sich befindende, völlig trockene und bakterienfreie Asche durch das Ausblasrohr 129 z. B. in einen Aschesack.

Alle Schaltungen der Verbrennungstoilette erfolgen über pneumatische und/oder elektronische Schaltglieder. Zur pneumatischen Steuerung sind für die Kurzzeiten pneumatische Kurzzeitglieder, für die längeren Schaltzeiten Volumenzeitglieder und für lange Schaltzeiten druckluftbetriebene Schaltuhren vorgesehen, was jedoch nicht näher dargestellt ist.

Natürlich ist das beschriebene Ausführungsbeispiel noch in vielfacher Hinsicht abzuändern, ohne den Grundgedanken der Erfindung zu verlassen. Insbesondere ist die Erfindung nicht auf eine spezielle Führung aller Kühlsysteme beschränkt. Neben den dargestellten direkten Kühlsystemen der wärmeempfindlichen Anlageteile kann auch eine indirekte Kühlung erfolgen, z. B. durch Versehen mit Kühlrippen und Anblasen mittels Druckluft. Neben der vollautomatischen Ascheentleerung des Aschefaches kann hier auch eine manuelle vorgesehen sein, ebenso wie die Erfindung nicht auf die bevorzugte pneumatische Steuerung beschränkt ist. In gleicher Weise können elektronische Bauteile verwendet werden. Werden weitere elektrische, ggf. schlagwettergefährdete Schaltelemente innerhalb der Verbrennungstoilette benutzt, können diese auch in einer eigenen, druckluftdurchspülten Kapselung eingebaut sein.

**Patentansprüche**

1. Elektrische Verbrennungstoilette mit einem den Sitz (2) und den Toilettendeckel (3) tragenden Gehäuse (4) sowie einem ersten Aufnahmeraum (5) für die Toilettenabfälle sowie einem in Schwerkraftsrichtung darunterliegenden von einem feuerfesten Deckel (19) abgeschlossenen Verbrennungsraum (6) mit Aschenfach (7), dadurch gekennzeichnet, daß die Toilette (1) als schlagwettergeschützte Verbrennungstoilette ausgebildet ist, wobei der Schlagwetterschutz durch eine preßluftbeaufschlagte Kapselung (12, 25) erfolgt, und daß die Kapselung über eine Preßluftzufuhr- (14) und eine Preßluftabfuhrleitung (15) preßluftdurchströmbar ausgebildet ist.

2. Verbrennungstoilette nach Anspruch 1, dadurch gekennzeichnet, daß alle zum Betrieb der Toilette benötigten elektrischen Aggregate (9) mit dem Verbrennungsraum (6) innerhalb der während des Verbrennungsvorganges geschlossenen Kapselung (12, 25) angeordnet sind.

3. Verbrennungstoilette nach Anspruch 1 oder 2, dadurch gekennzeichnet, daß die Toilette (1) innerhalb einer gekapselten, mit einer Preßluftzufuhr- (14) und Preßluftabfuhrleitung (15) versehenen Toilettenkabine (12) angeordnet ist.

4. Verbrennungstoilette nach einem der vorangehenden Ansprüche, dadurch gekennzeichnet, daß wenigstens ein Sicherungselement (20) vorgesehen ist, welches bei Ausfall der Preßluftdurchströmung die Zufuhr elektrischen Stromes zur Toilette (1) abschaltet und/oder wenigstens ein Sicherungselement (21) derart vorgesehen ist, daß bei Übergabe der Toilettenabfälle aus dem ersten Raum (5) in den Verbrennungsraum (6) die Zufuhr elektrischen Stromes unterbrochen ist.

5. Verbrennungstoilette nach Anspruch 1, dadurch gekennzeichnet, daß nur der abgeschlossene Verbrennungsraum (106) mit Aschefach (107) über eine Druckluftzuführ- (114) und eine Druckluftabführleitung (155) druckluftdurchströmbar ausgebildet ist, wobei insbesondere die Druckluftzufuhr (114) ein im Verbrennungsraum (106) angeordnetes, etwa kreisförmiges Spülrohr (116) mit Druckluft-Austrittsöffnungen (117) für Spülluft beaufschlagt.

6. Verbrennungstoilette nach einem der vorangehenden Ansprüche, dadurch gekennzeichnet, daß wenigstens die Wand des Verbrennungsraumes (106) im wesentlichen als Doppelkammer mit konzentrisch angeordneter Innen- (122) und Außenkammer (123) ausgebildet ist, wobei die Außenkammer (123) mit einer Wärmeisolation (111) und die Innenkammer (122) mit einer Füllung (124) aus Katalysatormaterial versehen ist, wobei insbesondere die dem Verbrennungsraum (6) zugewandte Kammerwand (140) mit einer Vielzahl von Eintrittsöffnungen (141) für die Spülluft aus dem Verbrennungsraum (106) und einer Auslaßöffnung (142) für die Spülluft versehen ist.

7. Verbrennungstoilette nach einem der vorangehenden Ansprüche, dadurch gekennzeichnet, daß das Aschefach (107) in der Gebrauchslage einstückig mit dem Verbrennungsraum (106) ausgeführt und mit einem weiteren Drucklufteintritt (126) und einem Druckluftaustritt (129) versehen ist, wobei insbesondere der Drucklufteintritt (126) den Druckluftstrahl gerichtet in das Aschefach (107) einleitet, wobei die wirksame Eintrittsöffnung des Druckluftstrahles geringfügig zur Mittelsenkrechten (145) des Aschefaches (107) exzentrisch angeordnet ist, während der Druckluftaustritt (129) im Bereich der Innenwand (146) des Aschefaches (107) angeordnet und tangential nach außen geführt ist.

8. Verbrennungstoilette nach einem der vorangehenden Ansprüche, dadurch gekennzeichnet, daß der Drucklufteintrittsstutzen (126) und/oder -austrittsstutzen (129) des Aschefaches (107) und/oder der Abluftstutzen (125) für die Spülluft und/oder den Druckrohrstutzen (119) der Überlastsicherung und/oder der dem Deckel zugewandte Randbereich (132) des Verbrennungsraumes (106) von Druckluft kühlbar sind, wobei insbesondere die Stutzen (119, 125, 126, 129) wenigstens bereichsweise mit einer von Druckluft durchströmten Außenkühlkammer (135) versehen sind.

9. Verbrennungstoilette nach einem der vorangehenden Ansprüche, gekennzeichnet durch folgende Arbeitstakte:

a) Starten durch Betätigen eines Schaltelementes, wie einer Drucktaste od. dgl., mit Einschalten der Druckluft,
b) zeitbegrenztes Spülen des Verbrennungsraumes und des Aschefaches mittels Druckluft über die Ringleitung,
c) Öffnen des Brennraumdeckels und gleichzeitiges Absenken der Fäkalien in den Brennraum und nachfolgendes Schließen des Deckels,
d) erneutes zeitbegrenztes Druckluftspülen,
e) Einschalten der Heizelemente und zeitbegrenztes Betreiben der Heizung unter geringfügigem Überdruck durch Aufrechterhalten eines Spülluftdurchganges,
f) Abschalten der Heizung,
g) zeitbegrenztes Nachspülen mittels Druckluft,
h) zeitbegrenztes Ausblasen der Asche aus dem Aschefach mittels Druckluft und
i) Abschalten der Druckluft.

**Claims**

1. An electrical combustion toilet comprising a housing (4) carrying the seat (2) and the toilet lid (3), and a first receiving chamber (5) for the toilet waste and a combustion chamber (6) with ash box (7), the combustion chamber being disposed below the receiving chamber (5) in the direction of the force of gravity and being closed off by a refractory cover (19), characterized in that the toilet (1) ist in the form of a combustion toilet which is protected from firedamp, wherein the firedamp protection is provided by an enclosure (12, 25) which is supplied with compressed air and that the enclosure is designed so that compressed air can flow therethrough, by way of a compressed air supply conduit (14) and a compressed air discharge conduit (15).

2. A combustion toilet according to claim 1, characterized in that all electrical units (9) required for operation of the toilet are arranged, with the combustion chamber (6), within the enclosure (12, 25) which is closed during the combustion operation.

3. A combustion toilet according to claim 1 or claim 2, characterized in that the toilet (1) is arranged within an enclosed toilet cabin (12) provided with a compressed air supply conduit (14) and a compressed air discharge conduit (15).

4. A combustion toilet according to one of the preceding claims, characterized in that there is provided at least one safety element (20) which switches off the feed of electrical current to the toilet (1) in the event of a failure of the flow of compressed air through the enclosure and/or at least one safety element (21) is so provided that the feed of the electrical current is interrupted when the toilet waste is transferred from the first chamber (5) into the combustion chamber (6).

5. A combustion toilet according to claim 1, characterized in that only the closed combustion chamber (106) with ash box (107) is designed such that compressed air can flow therethrough by way of a compressed air supply conduit (114) and a compressed air discharge conduit (115), wherein in particular the compressed air supply means (114) feeds a substantially circular flushing pipe (116) arranged in the combustion chamber (106), having compressed air outlet openings (117) for flushing air.

6. A combustion toilet according to one of the preceding claims, characterized in that at least the wall of the combustion chamber (106) is substantially in the form of a double chamber with concentrically arranged inner chamber (122) and outer chamber (123), wherein the outer chamber (123) is provided with a heat insulation means (111) and the inner chamber (122) is provided with a filling (124) comprising catalyst material, wherein in particular the chamber wall (140) which is towards the combustion chamber (6) is provided with a plurality of intake openings (141) for the flushing air from the combustion chamber (106) and an outlet opening (142) for the flushing air.

7. A combustion toilet according to one of the preceding claims, characterized in that the ash box (107), in the position of use, is formed integrally with the combustion chamber (106) and is provided with a further compressed air inlet (126) and a compressed air outlet (129), wherein in particular the compressed air inlet (126) introduces the jet of compressed air in a directed mode into the ash box (107), wherein the effective inlet opening of the compressed air jet is arranged slightly eccentrically with respect to the vertical line (145) through the middle of the ash box (107), while the compressed air outlet (129) is arranged in the region of the inner wall (146) of the ash box (107) and is extended tangentially outwardly.

8. A combustion toilet according to one of the preceding claims, characterized in that the compressed air inlet connection (126) and/or outlet connection (129) of the ash box (107) and/or the discharge connection (125) for the flushing air and/or the pressure pipe connection (119) of the overload safety means and/or the edge region (132), which is towards the cover, of the combustion chamber (106), can be cooled by compressed air, wherein in particular the connections (119, 125, 126, 129) are provided at least in a region thereof with an external cooling chamber (135) through which compressed air flows.

9. A combustion toilet according to one of the preceding claims, characterized by the following operating cycles:

a) starting by actuation of a switching element such as a push button or the like, with the compressed air feed being switched on,

b) flushing the combustion chamber and the ash box, for a limited period of time, by means of compressed air, by way of the ring conduit,

c) opening the combustion chamber cover and simultaneously dropping the faeces into the combustion chamber and subsequently closing the cover,

d) repeated flushing with compressed air for a limited period of time,

e) switching on the heating elements and operating the heating means for a limited period of time under a slightly increased pressure by maintaining a flushing air through-flow,

f) switching off the heating means,

g) post-flushing for a limited period of time by means of compressed air,

h) blowing the ash out of the ash box for a limited period of time, by means of compressed air, and

i) switching off the compressed air.

**Revendications**

1. Cuvette d'aisance à combustion électrique, comportant un caisson (4) qui supporte le siège (2) et l'abattant (3), ainsi qu'une première chambre réceptrice (5) pour les déchets de toilette et une chambre de combustion (6) sous-jacente dans la direction de la pesanteur, obturée par un couvercle réfractaire (19) et munie d'un compartiment à cendres (7), caractérisée par le fait que la cuvette (1) est réalisée sous la forme d'une cuvette d'aisance à combustion protégée du grisou, cette protection anti-grisou étant assurée par un chemisage (12, 25) sollicité par de l'air comprimé; et par le fait que le chemisage peut être parcouru par de l'air comprimé au moyen d'un conduit (14) d'amenée d'air comprimé et d'un conduit (15) d'évacuation d'air comprimé.

2. Cuvette d'aisance à combustion selon la revendication 1, caractérisée par le fait que tous les groupes électriques (9) nécessaires au fontionnement de ladite cuvette sont installés, avec la chambre de combustion (6), à l'intérieur du chemisage (12, 25) fermé lors du processus de combustion.

3. Cuvette d'aisance à combustion selon la revendication 1 ou 2, caractérisée par le fait que ladite cuvette (1) est disposée dans un cabinet d'aisance (12) chemisé, doté d'un conduit (14) d'amenée d'air comprimé et d'un conduit (15) d'évacuation d'air comprimé.

4. Cuvette d'aisance à combustion selon l'une des revendications précédentes, caractérisée par le fait qu'il est prévu au moins un élément de sécurité (20) qui, en cas de défaillance de la circulation traversante de l'air comprimé, déclenche l'alimentation en courant électrique de la cuvette (1) et/ou il est prévu au moins un élément de sécurité (21) de telle façon que l'alimentation en courant électrique soit interrompue lors du transfert des déchets de toilette de la première chambre (5) à la chambre de combustion (6).

5. Cuvette d'aisance à combustion selon la revendication 1, caractérisée par le fait que seule la chambre de combustion obturée (106) avec le compartiment à cendres (107) peut être parcourue par de l'air comprimé par l'intermédiaire d'un conduit (114) d'amenée d'air comprimé et d'un conduit (115) d'évacuation de l'air comprimé, en particulier ledit conduit (114) d'amenée de l'air comprimé sollicitant un tube de projection (116) sensiblement circulaire qui est logé dans la chambre de combustion (106) et est percé d'ajutages (117) de sortie de l'air comprimé pour l'air de balayage.

6. Cuvette d'aisance à combustion selon l'une des revendications précédentes, caractérisée par le fait qu'au moins la paroi de la chambre de combustion (106) est réalisée pour l'essentiel sous la forme d'une chambre double avec une chambre interne (122) et une chambre externe (123) agencées concentriquement, la chambre extern (123) étant pourvue d'une isolation thermique (111) et la chambre interne (122) étant dotée d'un garnissage (124) en une matière catalytique, en particulier la paroi (140) de la chambre, tournée vers la chambre de combustion (6), étant percée de plusieurs orifices d'entrée (141) pour l'air de balayage provenant de la chambre de combustion (106), ainsi que d'un orifice d'évacuation (142) pour l'air de balayage.

7. Cuvette d'aisance à combustion selon l'une des revendications précédentes, caractérisée par le fait que le compartiment à cendres (107) est, dans la position d'utilisation, réalisé d'un seul tenant avec la chambre de combustion (106) et est muni d'une autre entrée (126) de l'air comprimé et d'une sortie (129) de cet air comprimé, en particulier ladite entrée (126) d'air comprimé introduisant le courant d'air comprimé avec une orientation donnée dans le compartiment à cendres (107), l'orifice efficace d'entrée du courant d'air comprimé étant disposé d'une manière légèrement excentrée par rapport à la perpendiculaire (145) tracée au centre du compartiment à cendres (107), cependant que la sortie (129) de l'air comprimé se trouve au voisinage de la paroi interne (146) dudit compartiment à cendres (107) et est dirigée trangentiellement vers l'extérieur.

8. Cuvette d'aisance à combustion selon l'une des revendications précédentes, caractérisée par le fait que le manchon (126) d'entrée de l'air comprimé et/ou le manchon (129) de sortie de l'air comprimé du compartiment à cendres (107) et/ou le manchon (125) de sortie pour l'air de balayage et/ou pour le manchon tubulaire de pression (119) du fusible de surcharge et/ou la zone marginale (132) de la chambre de combustion (106) tournée vers le couvercle, peuvent être refroidis par de l'air comprimé, en particulier les manchons (119, 125, 126, 129) étant pourvus, au moins par zones, d'une chambre externe de refroidissement (135) parcourue de part en part par de l'air comprimé.

9. Cuvette d'aisance à combustion selon l'une des revenditions précédentes, caractérisée par les étapes opératoires suivantes:

a) mise en marche par actionnement d'un élément de commutation, comme un bouton-poussoir ou élément analogue, avec enclenchement de l'air comprimé,

b) rinçage, délimité dans le temps, de la chambre de combustion et du compartiment à cendres au moyen d'air comprimé par l'intermédiaire du conduit annulaire,

c) ouverture du couvercle de la chambre de combustion et chute simultanée des matières fécales dans la chambre de combustion, puis fermeture dudit couvercle,

d) répétition du rinçage à délimitation temporelle par de l'air comprimé,

e) enclenchement des éléments chauffants et actionnement du chauffage délimité dans le temps, sous une légère surpression par maintien d'un passage traversant de l'air de balayage,

f) déclenchement du chauffage,

g) rinçage ultérieur à délimitation temporelle par de l'air comprimé,

h) expulsion, délimitée dans le temps, de la cendre hors du compartiment à cendres par de l'air comprimé et

i) déclenchement de l'air comprimé.

FIG.1

FIG. 2

# FIG. 3

FIG.4

FIG.5

FIG.6

123 124 111 122 117 116 139 118

FIG.7

123 107 146 " X " 145 144 129 135 147 126 135' 135¹